# EUROPÄISCHE PATENTANMELDUNG

(11) **EP 0 798 353 A1**
(43) Veröffentlichungstag der Anmeldung: **01.10.1997**
(21) Anmeldenummer: 97104555.4
(22) Anmeldetag: 18.03.1997
(51) Int. Cl.: C09D 15/00, B27K 5/02

(54) **Arylamine als Markierungsmittel für Holz**

(30) Priorität: 26.03.1996 DE 19611868
(71) Anmelder: BASF AKTIENGESELLSCHAFT, 67056 Ludwigshafen (DE)
(72) Erfinder: Kurtz, Walter, Dr., 67098 Bad Dürkheim (DE); Vamvakaris, Christos, Dr., 67169 Kallstadt (DE); Beck, Karin Heidrun, Dr., 67067 Ludwigshafen (DE); Krüsemann, Juliane, 67069 Ludwigshafen (DE)

(57) **Zusammenfassung**

Verwendung von Anilinen der Formel 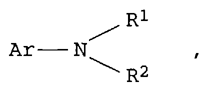 in der
- Ar: einen gegebenenfalls substituierten Phenyl- oder Naphthylrest und
- R¹ und R²: Wasserstoff, gegebenenfalls substituiertes Alkyl, Cycloalkyl, Alkenyl, gegebenenfalls substituiertes Phenyl oder R¹ und R² zusammen mit dem sie verbindenden Stickstoffatom einen heterocyclischen Rest oder R¹ auch gegebenenfalls substituiertes Hydroxy oder gegebenenfalls substituiertes Amino bedeuten,
zum Markieren von Holz sowie ein Verfahren zum Nachweis der obengenannten Arylamine im Holz.

## Beschreibung

Die vorliegende Erfindung betrifft die Verwendung von Arylaminen der Formel I 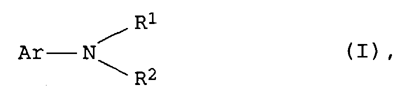 in der
- Ar ein Rest: der Formel 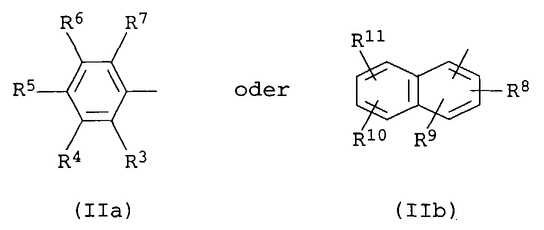 ist und
- R¹ und R²: unabhängig voneinander jeweils Wasserstoff, C₁-C₁₈-Alkyl, das gegebenenfalls substituiert ist und durch 1 bis 3 Sauerstoffatome in Etherfunktion oder 1 bis 3 nicht benachbarte C₁-C₄-Alkyliminogruppen unterbrochen sein kann, C₅-C₇-Cycloalkyl, C₃-C₁₈-Alkenyl, gegebenenfalls substituiertes Phenyl oder R¹ und R² zusammen mit dem sie verbindenden Stickstoffatom einen 5- oder 6-gliedrigen gesättigten heterocyclischen Rest, der ein weiteres Heteroatom aufweisen kann, oder R¹ auch einen Rest der Formel OL¹ oder NL¹L², worin L¹ und L² unabhängig voneinander jeweils für Wasserstoff, gegebenenfalls substituiertes C₁-C₁₈-Alkyl, C₅-C₇-Cycloalkyl, C₃-C₁₈-Alkenyl oder gegebenenfalls substituiertes Phenyl stehen,
- R³,R⁷,R⁸,R⁹,R¹⁰ und R¹¹: unabhängig voneinander jeweils Wasserstoff, gegebenenfalls substituiertes C₁-C₁₈-Alkyl, C₂-C₁₈-Alkenyl, Cyano, Nitro, Hydroxysulfonyl, Formyl, gegebenenfalls substituiertes C₂-C₄-Alkanoyl, Formylamino, gegebenenfalls substituiertes C₂-C₄-Alkanoylamino, Benzoylamino oder einen Rest der Formel OL¹, COOL¹, CH₂COOL¹, NL¹L², SL¹ oder SO₂NL¹L², worin L¹ und L² jeweils die obengenannte Bedeutung besitzen oder R³, R⁷ oder R⁸ zusammen mit R² C₂-C₃-Alkylen, das gegebenenfalls durch Hydroxy oder ein- bis dreifach durch Methyl substituiert ist, oder gegebenenfalls durch Phenyl substituiertes C₂-C₃-Alkenylen,
- R⁴: Wasserstoff, gegebenenfalls substituiertes C₁-C₁₈-Alkyl, C₂-C₁₈-Alkenyl, Nitro oder einen Rest der Formel OL¹, NL¹L², COOL¹ oder SO₂NL¹L², worin L¹ und L² jeweils die obengenannte Bedeutung besitzen, und
- R⁵ und R⁶: unabhängig voneinander jeweils Wasserstoff, gegebenenfalls substituiertes C₁-C₁₈-Alkyl, C₂-C₁₈-Alkenyl, gegebenenfalls substituiertes Phenyl, Nitro, Formylamino, gegebenenfalls substituiertes C₂-C₄-Alkanoylamino, Benzoylamino, Halogen oder einen Rest der Formel OL¹, NL¹L², SO₂NL¹L², SO₂L³, COL¹ oder COOL¹, worin L¹ und L² jeweils die obengenannte Bedeutung besitzen und L³ für gegebenenfalls substituiertes C₁-C₁₈-Alkyl, C₃-C₁₈-Alkenyl oder gegebenenfalls substituiertes Phenyl steht, bedeuten,
mit der Maßgabe, daß in Formel IIb, a) wenn die Reste NR¹R² und NL¹R² peri-ständig sind, R¹ und L¹ zusammen auch Isopropyliden bedeuten können, b) mindestens einer der Reste R³, R⁵ oder R⁷ Wasserstoff bedeutet und c) 1-Aminonaphthalin ausgenommen ist,
zum Markieren von Holz sowie ein Verfahren zum Nachweis der obengenannten Arylamine im Holz.

Aus Chem. Abstr., Band 84, 46384 r, 1976, ist die Verwendung von 1-Aminonaphthalin zum Markieren von Holz bekannt. Der Nachweis von Aminonaphthalin erfolgt dort mittels UV-Lumineszenzmessung.

Aufgabe der vorliegenden Erfindung war es, neue Mittel zum Markieren von Holz bereitzustellen. Die neuen Mittel sollten leicht zugänglich sein und gut in Holz eindringen können. Außerdem sollten sie in einfacher Weise nachgewiesen werden können. Dabei sollten selbst noch sehr kleine Mengen an Markierstoff durch eine starke Farbreaktion sichtbar gemacht werden können.

Demgemäß wurde gefunden, daß sich die eingangs näher bezeichneten Arylamine der Formel I vorteilhaft zum Markieren von Holz eignen.

Alle in der obengenannten Formel I auftretenden Alkyl- und Alkenylreste können sowohl geradkettig als auch verzweigt sein.

Im erfindungsgemäßen Sinn sind unter Alkenylresten im wesentlichen solche Reste zu verstehen, die 1 bis 3 Doppelbindungen aufweisen.

Wenn in der obengenannten Formel I substituierte Alkylgruppen auftreten, so können als Substituenten z.B. Hydroxy, C₁-C₄-Alkoxy, Phenoxy, Cyano, Phenyl, C₁-C₄-Dialkylamino, C₁-C₄-Alkanoyloxy, 1-(C₁-C₄-Alkoxy)-C₂-C₄-alkoxy, N-(C₁-C₄-Alkyl)-N-(hydroxy-C₂-C₄--alkyl)carbamoyl, C₁-C₄-Alkoxycarbonyl, Phenoxycarbonyloxy, C₁-C₄-Alkylaminocarbonyloxy, Phenylaminocarbonyloxy oder Acetacetyloxy in Betracht kommen. Die Alkylgruppen weisen dabei in der Regel 1 oder 2 Substituenten auf.

Wenn in der obengenannten Formel I substituierte Phenylgruppen auftreten, so können als Substituenten z.B. C₁-C₄-Alkyl oder C₁-C₄-Alkoxy in Betracht kommen. Die Phenylgruppen weisen dabei in der Regel 1 bis 3 Substituenten auf.

Wenn R¹ und R² zusammen mit dem sie verbindenden Stickstoffatom einen 5- oder 6-gliedrigen gesättigten heterocyclischen Rest, der ein weiteres Heteroatom aufweisen kann, bedeuten, so können dafür z.B. Pyrrolidinyl, Piperidinyl, Morpholinyl, Piperazinyl oder N-(C₁-C₄-Alkyl)piperazinyl in Betracht kommen.

Reste R¹, R², R³, R⁴, R⁵, R⁶, R⁷, L¹, L² und L³ sind z.B. Methyl, Ethyl, Propyl, Isopropyl, Butyl, Isobutyl, sec-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, Cyanomethyl, 2-Cyanoethyl, 3-Cyanopropyl, 2-Cyanobutyl, 4-Cyanobutyl, 5-Cyanopentyl, 6-Cyanohexyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 5-Hydroxy-3-oxapentyl, Benzyl, 1-Phenylethyl, 2-Phenylethyl, 2-Formyloxyethyl, 2-Acetyloxyethyl, 2-Propionyloxyethyl, 2-Isobutyryloxyethyl, 2- oder 3-Formyloxypropyl, 2- oder 3-Acetyloxypropyl, 2- oder 3-Propionyloxypropyl, 2- oder 3-Isobutyryloxypropyl, 2- oder 4-Formyloxybutyl, 2- oder 4-Acetyloxybutyl, 2- oder 4-Propionyloxybutyl, 2- oder 4-Isobutyryloxybutyl, N-Methyl-N-(2-hydroxyethyl)-carbamoyl, 2-Methoxycarbonylethyl, 2-Ethoxycarbonylethyl, 2-Phenoxycarbonyloxyethyl, 2-Methylaminocarbonyloxyethyl, 2-Ethylaminocarbonyloxyethyl, 2-Isopropylaminocarbonyloxyethyl, 2-Phenylaminocarbonyloxyethyl, 2-Acetacetyloxyethyl, Allyl, Prop-1-en-1-yl, Methallyl, Ethallyl, Pentenyl, Pentadienyl, Hexadienyl, 3,7-Dimethylocta-1,6-dien-1-yl, Undec-10-en-1-yl, 6,10-Dimethylundeca-5,9-dien-2-yl, 3,7-11-Trimethyldodeca-1,6,10-trien-1-yl, 3,7,11-Trimethyldodeca-2,6, 10-trien-1-yl, Octadec-9-en-1-yl, Octadeca-9,12-dien-1-yl, Octadeca-9,12,15-trien-1-yl, 6,10,14-Trimethylpentadeca-5,9, 13-trien-2-yl, Hydroxy, Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, Heptyloxy, Octyloxy, Isooctyloxy, 2-Ethylhexyloxy, Nonyloxy, Isononyloxy, Decyloxy, Isodecyloxy, Undecyloxy, Dodecyloxy, Tridecyloxy, Isotridecyloxy, Tetradecyloxy, Pentadecyloxy, Hexadecyloxy, Heptadecyloxy, Octadecyloxy, Amino, Mono- oder Dimethylamino, Mono- oder Diethylamino, Mono- oder Dipropylamino, Mono- oder Diisopropylamino, Mono- oder Dibutylamino, N-Methyl-N-ethylamino, Mono- oder Diallylamino, Phenylamino oder N-Phenyl-N-methylamino.

Reste R¹ und R² sind weiterhin z.B. 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 2-Dimethylaminoethyl, 2-Diethylaminoethyl, 2- oder 3-Dimethylaminopropyl, 2- oder 3-Diethylaminopropyl, 2- oder 4-Dimethylaminopropyl, 2- oder 4-Diethylaminobutyl, 3,6-Dimethyl-3,6-diazaheptyl, 3,6,9-Trimethyl-3,6,9-triazadecyl, 2-(1-Methoxyethoxy)ethyl, 2-(1-Ethoxyethoxy)ethyl, 2-(1-Isobutoxyethoxy)ethyl, 2- oder 3-(1-Methoxyethoxy)propyl, 2- oder 3-(1-Ethoxyethoxy)propyl oder 2- oder 3-(1-Isobutoxyethoxy)propyl.

Reste R¹, R², R⁵ und R⁶ sind weiterhin z.B. Phenyl, 2-, 3- oder 4-Methylphenyl, 2-, 3- oder 4-Ethylphenyl, 2,4-Dimethylphenyl, 2-, 3- oder 4-Methoxyphenyl, 2-, 3- oder 4-Ethoxyphenyl oder 2,4-Dimethoxyphenyl.

Reste R³, R⁵, R⁶ und R⁷ sind weiterhin z.B. Formylamino, Acetylamino, Propionylamino, Butyrylamino oder Isobutyrylamino.

Reste R³, R⁴, R⁵, R⁶ und R⁷ sind weiterhin z.B. Vinyl, Sulfamoyl, Mono- oder Dimethylsulfamoyl, Mono- oder Diethylsulfamoyl, Mono- oder Dipropylsulfamoyl, Mono- oder Diisopropylsulfamoyl, Mono- oder Dibutylsulfamoyl, N-Methyl-N-ethylsulfamoyl, Mono- oder Diallylsulfamoyl oder Phenylsulfamoyl.

Reste R³ und R⁷ sind weiterhin z.B. Carboxylmethyl, Methoxycarbonylmethyl, Ethoxycarbonylmethyl, Propoxycarbonylmethyl, Isopropoxycarbonylmethyl, Butoxycarbonylmethyl, Allyloxycarbonylmethyl, Phenoxycarbonylmethyl, Mercapto, Methylthio, Ethylthio, Propylthio, Isopropylthio oder Butylthio.

Reste R⁴, R⁵ und R⁶ sind weiterhin z.B. Carboxyl, Methoxycarbonyl, Ethoxycarbonyl, Propoxycarbonyl, Isopropoxycarbonyl, Butoxycarbonyl, Allyloxycarbonyl, Phenoxycarbonyl, Allylthio oder Phenylthio.

Reste R⁵ und R⁶ sind weiterhin z.B. Fluor, Chlor, Brom, Methylsulfonyl, Ethylsulfonyl, Propylsulfonyl, Isopropylsulfonyl, Butylsulfonyl, Phenylsulfonyl, Formyl, Acetyl, Propionyl, Butyryl, Isobutyryl oder Benzoyl.

Reste R² und R³ oder R² und R⁷ oder R² und R⁸ zusammen sind z.B. 1,3-Propylen, 2-Hydroxy-1,3-propylen, 1,1,3-Trimethyl-1,3-propylen, Vinylen, Phenylvinylen oder ein Rest der Formel CH=CH-CH₂.

Bevorzugt werden Arylamine der Formel Ia 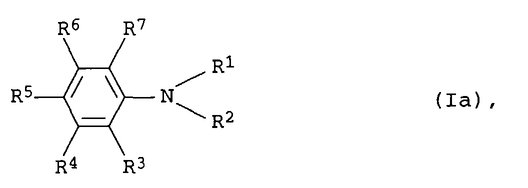 in der
- R¹ und R²: unabhängig voneinander jeweils Wasserstoff, C₁-C₁₅-Alkyl, das gegebenenfalls substituiert ist und durch 1 bis 3 Sauerstoffatome in Etherfunktion oder 1 bis 3 nicht benachbarte C₁-C₄-Alkyliminogruppen unterbrochen sein kann, Allyl, gegebenenfalls substituiertes Phenyl oder R¹ und R² zusammen mit dem sie verbindenden Stickstoffatom einen 5- oder 6-gliedrigen gesättigten heterocyclischen Rest, der ein weiteres Heteroatom aufweisen kann,
- R³ und R⁷: unabhänig voneinander jeweils Wasserstoff, C₁-C₄-Alkoxy oder zusammen mit R² 1,3-Propylen, das gegebenenfalls ein- bis dreifach durch Methyl substituiert ist,
- R⁴ und R⁵: jeweils Wasserstoff und
- R⁶: Wasserstoff, C₁-C₄-Alkyl, C₁-C₄-Alkoxy, C₁-C₄-Alkanoylamino oder Benzoylamino bedeuten,
zum Markieren von Holz verwendet.

Weiterhin bevorzugt werden Arylamine der Formel Ib 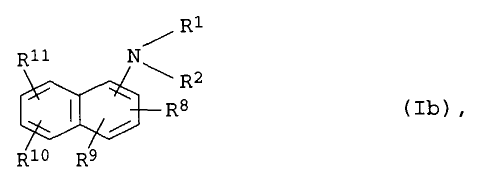 in der
- R¹ und R²: unabhängig voneinander jeweils Wasserstoff, C₁-C₁₅-Alkyl, das gegebenenfalls substituiert ist und durch 1 bis 3 Sauerstoffatome in Etherfunktion unterbrochen sein kann, Cyclohexyl, gegebenenfalls substituiertes Phenyl oder R¹ und R² zusammen mit dem sie verbindenden Stickstoffatom einen 5- oder 6-gliedrigen gesättigten heterocyclischen Rest, der ein weiteres Heteroatom aufweisen kann, und
- zwei der Reste R⁸, R⁹, R¹⁰ und R¹¹: jeweils Wasserstoff und die anderen beiden unabhängig voneinander jeweils Wasserstoff, C₁-C₄-Alkyl, C₁-C₄-Alkoxy, Hydroxy, Nitro, C₁-C₄-Alkanoylamino, Benzoylamino, einen Rest der Formel NL¹L², worin L¹ und L² unabhängig voneinander für Wasserstoff oder C₁-C₄-Alkyl stehen, Cyano oder Carboxyl bedeuten, wobei, wenn die Reste NR¹R² und NL¹L² peri-ständig sind, R¹ und L¹ zusammen auch Isopropyliden bedeuten können,
zum Markieren von Holz verwendet.

Besonders bevorzugt werden Arylamine der Formel Ia, in der R¹ und R² jeweils Wasserstoff oder C₁-C₄-Alkyl oder mindestens einer der beiden Reste R¹ und R² C₂-C₁₅-Alkyl, das durch Hydroxy substituiert ist und durch 1 bis 3 Sauerstoffatome in Etherfunktion oder 1 bis 3 nicht benachbarte C₁-C₄-Alkyliminogruppen unterbrochen sein kann, und R⁶ C₁-C₄-Alkyl, insbesondere Methyl, bedeuten, zum Markieren von Holz verwendet.

Besonders bevorzugt werden weiterhin Arylamine der Formel Ia, in der R³ Wasserstoff, C₁-C₄-Alkyl oder C₁-C₄-Alkoxy und R⁶ Wasserstoff, C₁-C₄-Alkyl, C₁-C₄-Alkoxy, Amino oder Acetylamino bedeuten, zum Markieren von Holz verwendet.

Besonders bevorzugt werden weiterhin Arylamine der Formel Ia, in der R⁷ Wasserstoff, C₁-C₄-Alkyl oder C₁-C₄-Alkoxy bedeutet, zum Markieren von Holz verwendet.

Besonders bevorzugt werden weiterhin Arylamine der Formel Ib, in der R¹ Wasserstoff, R² C₁-C₁₅-Alkyl, das durch 1 bis 3 Sauerstoffatome in Etherfunktion unterbrochen sein kann, oder Cyclohexyl und einer der Reste R⁸, R⁹, R¹⁰ und R¹¹ Hydroxy oder C₁-C₄-Alkoxy und die anderen Wasserstoff bedeuten, zum Markiern von Holz verwendet.

Insbesondere verwendet man Arylamine der Formel Ia, in der mindestens einer der beiden Reste R¹ und R² C₂-C₄-Alkyl, das durch Hydroxy substituiert ist, und R⁶ Methyl bedeuten, zum Markieren von Holz.

Hervorzuheben ist die Verwendung von Arylaminen der Formel Ia, in der R¹ und R² jeweils C₂-C₄-Alkyl, das durch Hydroxy substituiert ist, insbesondere 2-Hydroxyethyl oder 2-oder 3-Hydroxypropyl oder R¹ C₂-C₄-Alkyl, das durch Hydroxy substituiert ist, insbesondere 2-Hydroxyethyl oder 2- oder 3-Hydroxypropyl und R² C₁-C₄-Alkyl bedeuten, zum Markieren von Holz.

Holz im erfindungsgemäßen Sinn sind alle üblichen Hölzer, wie Kiefer, Fichte, Tanne, Eiche, Esche, Buche, Ahorn, Nußbaum, Birnbaum, Teakholz, Mahagoni, Kastanie, Birke, Lärche, Haselnuß, Linde, Weide, Pappel, Ulme, Föhre, Platane oder Espe. Die Markierung von Kiefern-, Fichten- oder Tannenholz ist bevorzugt.

Es können sowohl Massivholz als auch Sperrholz, Schichtholz oder Spanplatten markiert werden.

Die Anwendung der Arylamine der Formel I erfolgt in der Regel in Form einer Lösung. Als Lösungsmittel können z.B. Kohlenwasserstoffe, wie Heptan, Octan oder Isooctan, aromatische Kohlenwasserstoffe, wie Toluol, Xylol, Dodecylbenzol, Diisopropylnaphthalin oder ein Gemisch höherer Aromaten, das unter dem Namen Shellsol® AB (Fa. Shell) handelsüblich ist, Alkohole, wie Methanol, Ethanol, Propanol, Isopropanol, Ethylglykol oder 1,2-Propylenglykol, Ether, wie 2-Methoxyethanol, 2-Ethoxyethanol, 2-Butoxyethanol, 2-(2-Methoxyethoxy)ethanol, 1-Methoxypropan-2-ol oder Tetrahydrofuran, Carbonsäureamide, wie N,N-Dimethylformamid oder N-Methylpyrrolidinon, Propylencarbonat, Dimethylsulfoxid, Sulfolan, Ketone, wie Aceton oder Methylethylketon, oder Ester, wie Methylacetat, Ethylacetat oder Butylacetat, verwendet werden.

Die Markierung von Holz kann dann z.B. durch Eintauchen des Holzes in diese Lösung (Tauchimprägnierung) oder durch Druckimprägnierung erfolgen.

Besonders bevorzugt geschieht die erfindungsgemäße Anwendung der Arylaminen direkt in üblichen und an sich bekannten Holzbeizen (Imprägniermittel). Solche Holzbeizen weisen in der Regel eine Lösungsmittel-Basis auf und enthalten üblicherweise bis zu ca. 25 Gew.-% Bindemittel, Fungizide, Stabilisatoren oder Tenside.

Der Gehalt an Arylaminen, bezogen auf 1 kg der anzuwendenden Lösung, vorzugsweise in Form einer Holzbeize, liegt üblicherweise bei 50 bis 5000 mg, vorzugsweise 100 bis 3000 mg und insbesondere 500 bis 2000 mg.

Besonders günstig ist die Behandlung des Holzes durch Tauchimprägnierung mit einer solchen Lösung, insbesondere Holzbeize. Die Größe des Tauchbads ist dabei von der Größe des zu behandelnden Holzes abhängig.

Mittels dern erfindungsgemäß anzuwendenden Arylamine der Formel I gelingt es sehr einfach, markiertes Holz nachzuweisen.

Der Nachweis der als Markierungsstoffe angewandten Arylamine der Formel I in Holz gelingt vorteilhaft, wenn man das Arylamin der Formel I durch Behandeln des markierten Holzes mit einem wäßrigsauren Medium, das ein Diazoniumsalz, das sich von einem Amin aus der Aminoanthrachinon-, Aminonaphthalin-, Anilin-, Aminothiophen-, Aminothiazol- oder Aminobenzisothiazolreihe ableitet, und gegebenenfalls einen Puffer enthält, in einen Azofarbstoff überführt.

Die Behandlung des markierten Holzes mit dem wäßrig-sauren Medium kann auf an sich bekannter Weise, z.B. durch Besprühen oder Bepinseln des Holzes mit dem wäßrig-sauren Medium erfolgen.

Geeignete Säuren, die dem wäßrigen-sauren Lösungen zugrundeliegen, sind z.B. anorganische oder organische Säuren, wie Salzsäure, Schwefelsäure, Salpetersäure, Phosphorsäure, Ameisensäure, Essigsäure oder Propionsäure. Die sauren wäßrigen Lösungen weisen im allgemeinen eine Säurekonzentration von 0,5 bis 20 Gew.-% auf.

Geeignete Puffersubstanzen sind z.B. Alkaliacetate, Monoalkalicitrate, Alkalidihydrogenphosphate, wobei insbesondere jeweils die Natriumsalze zu nennen sind, oder solche Puffersysteme, wie sie im CRC Handbook of Chemistry and Physics, 76th Ed., 1995-1996, Seiten 8-38 und 8-39 genannt sind.

Die wäßrig-sauren Medien können weiterhin noch wassermischbare organische Lösungsmittel und/oder anorganischen Substanzen enthalten.

Wassermischbare organische Lösungsmittel sind z.B. Alkohole, wie Methanol, Ethanol, Propanol, Isopropanol, Ethylglykol oder 1,2-Propylenglykol, Ether, wie 2-Methoxyethanol, 2-Ethoxyethanol, 2-Butoxyethanol, 2-(2-Methoxyethoxy)ethanol, 1-Methoxypropan-2-ol oder Tetrahydrofuran, Carbonsäureamide, wie N,N-Dimethylformamid oder N-Methylpyrrolidinon, Propylencarbonat, Dimethylsulfoxid oder Sulfolan. Wenn wassermischbare organische Lösungsmittel vorhanden sind, so liegt ihr Anteil im allgemeinen bei 1 bis 50 Gew.-%, bezogen auf das Gewicht des wäßrigen Mediums.

Anorganische Substanzen sind z.B. Salze, wie Alkalihalogenide, Aluminiumhalogenide oder Zinkhalogenide, oder Ammoniak.

Als Amin aus der Anthrachinonreihe sind 1-Aminoanthrachinon und 4-Chlor-1-aminoanthrachinon besonders hervorzuheben.

Geeignete Aminonaphthaline gehorchen z.B. der Formel III 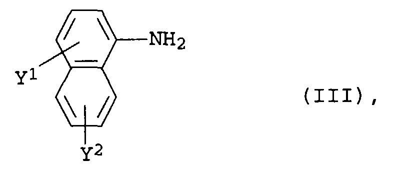 in der Y¹ und Y² unabhängig voneinander jeweils Wasserstoff, Hydroxy oder Hydroxysulfonyl bedeuten.

Geeignete Aniline, die den Diazoniumsalzen zugrundeliegen, gehorchen z.B. der Formel IV 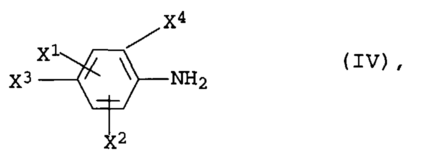 in der
- X¹: Wasserstoff, Halogen, C₁-C₄-Alkoxy, Nitro oder Hydroxysulfonyl,
- X²: Wasserstoff, Halogen, C₁-C₄-Alkoxy, Cyano, Nitro, oder gegebenenfalls durch Methyl, Ethyl, Methoxy oder Ethoxy substituiertes Phenylazo,
- X³: Wasserstoff, C₁-C₄-Dialkylamino, Pyrrolidino, Piperidino, Morpholino, Nitro oder Hydroxysulfonyl und
- X⁴: Wasserstoff, Halogen, Cyano oder einen heterocyclischen Rest, z.B. 3-Phenyl-1,2,4-oxadiazol-5-yl, bedeuten.

Geeignete Aminothiophene, Aminothiazole oder Aminobenzisothiazole gehorchen z.B. der Formel

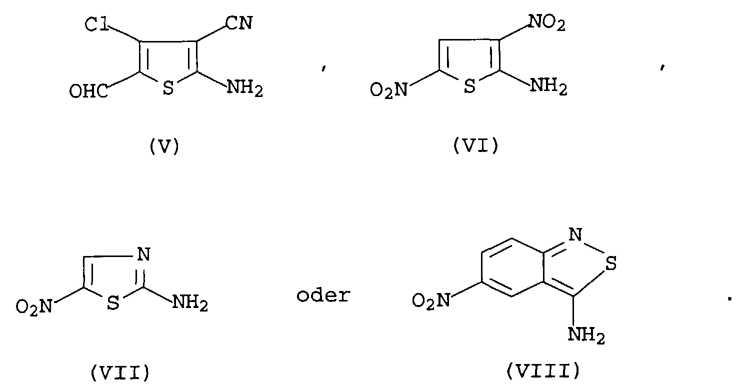

Geeignete Anionen, die als Gegenionen zu den Diazoniumkationen in Betracht kommen, sind die dort üblichen Anionen, wie Chlorid, Bromid, Hydrogensulfat, Sulfat, Dihydrogenphosphat, Monohydrogenphosphat, Phosphat, Tetrafluoroborat, Tetrachlorozinkat, Naphthalin-1,5-disulfonat oder Acetat.

In manchen Fällen ist es vorteilhaft, noch geringe Mengen an Alkalisalzen von Arylsulfonsäuren, z.B. das Natriumsalz der Naphthalin-1,5-disulfonsäure, als Stabilisator für die Diazoniumsalze zuzusetzen.

Bevorzugt ist ein Nachweisverfahren, das mit einem Diazoniumsalz durchgeführt wird, das sich von 1-Aminoanthrachinon oder von einem Anilin der Formel IV ableitet, worin X¹ Wasserstoff, Chlor oder Nitro, X² Chlor oder Nitro und X³ Wasserstoff bedeuten. Besonders hervorzuheben ist ein Nachweisverfahren, das mit einem Diazoniumsalz durchgeführt wird, das sich von 1-Aminoanthrachinon ableitet.

Zur Nachweisreaktion verwendet man in der Regel eine wäßrige Lösung eines Diazoniumsalzes, die 0,1 bis 2 Gew.-%, bezogen auf das Gewicht der Lösung, an Diazoniumsalz aufweist. Je Gewichtsteil markiertes Holz (atro) werden dabei im allgemeinen 0,001 bis 0,1 Gew.-Teile Diazoniumsalzlösung angewandt.

Bei den erfindungsgemäß als Markierungsmittel für Holz zur Anwendung gelangenden Arylamine der Formel I handelt es sich um übliche an sich bekannte Produkte aus der Farbstoffherstellung. Sie sind leicht zugänglich.

Mittels der erfindungsgemäßen Markierung und des erfindungsgemäßen Nachweisverfahrens gelingt es in einfacher Weise, die Eindringtiefe beispielsweise von farblosen Holzbeizen in das Holz festzustellen. Alle Bereiche, die den Markierstoff der Formel I enthalten, werden bei der Nachweisreaktion unter Bildung eines Azofarbstoffs für das menschliche Auge deutlich sichtbar angefärbt.

Die folgenden Beispiele sollen die Erfindung näher erläutern.

### Beispiel 1

a) Markierung
   1 g N-Ethyl-N-(2-hydroxyethyl)anilin wurden in 1 l Toluol gelöst. Holzstücke wurden in diese Lösung getaucht. Man ließ die Lösung 5 min einwirken. Das Holz wurde dann aus der Lösung genommen und getrocknet.
b) Detektion
   Das Holz wurde mit einer 0,2 gew.-%igen Lösung des Diazoniumsalzes von 1-Aminoanthrachinon (Sulfat) in Wasser/Essigsäure (1:1 v/v) besprüht. Das markierte Holz färbte sich rot.

Ähnlich gute Ergebnisse werden auch mit den in den folgenden Tabellen 1 und 2 aufgeführten Anilinen und Naphthylaminen erhalten.

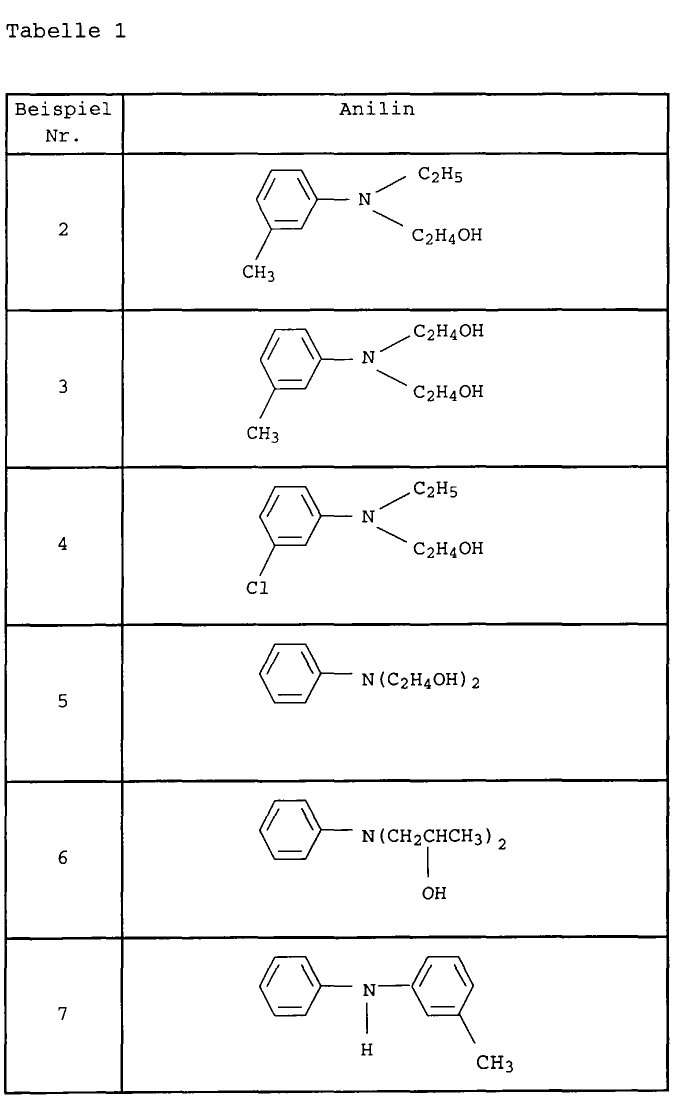

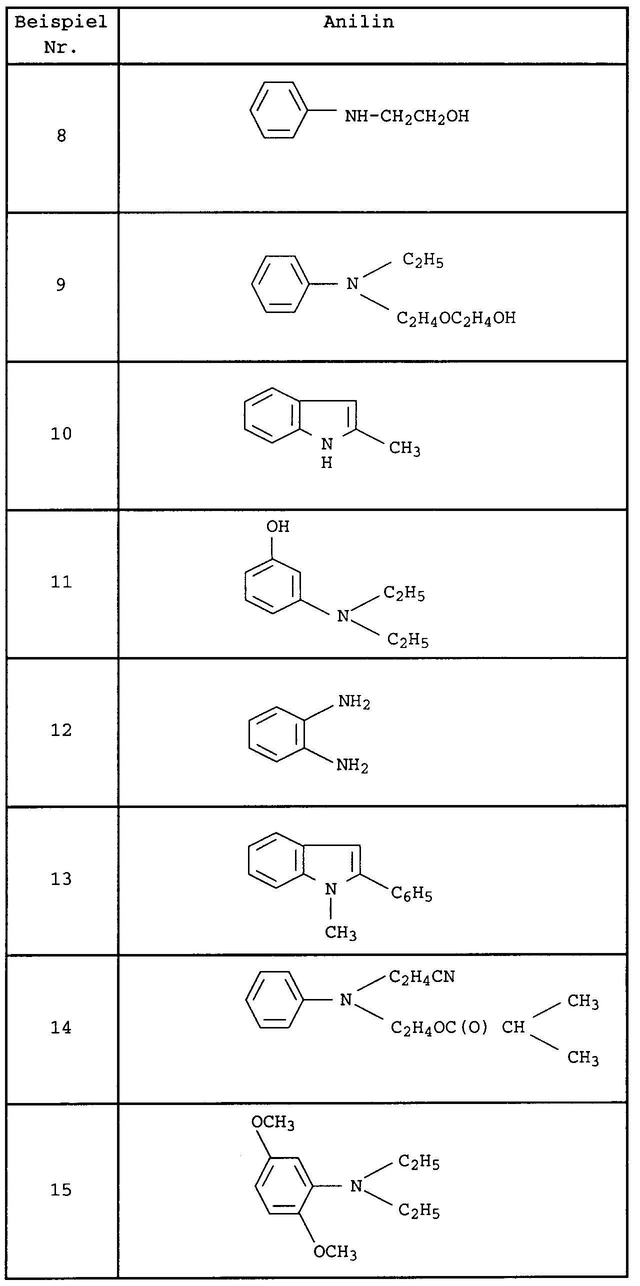

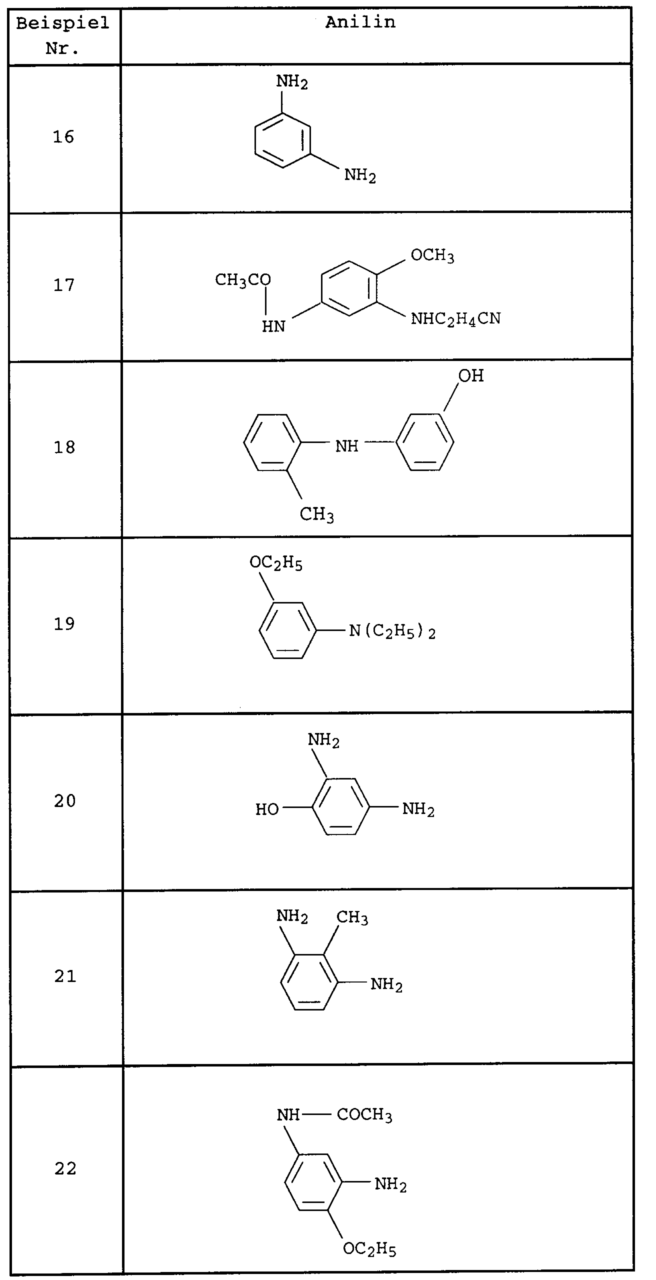

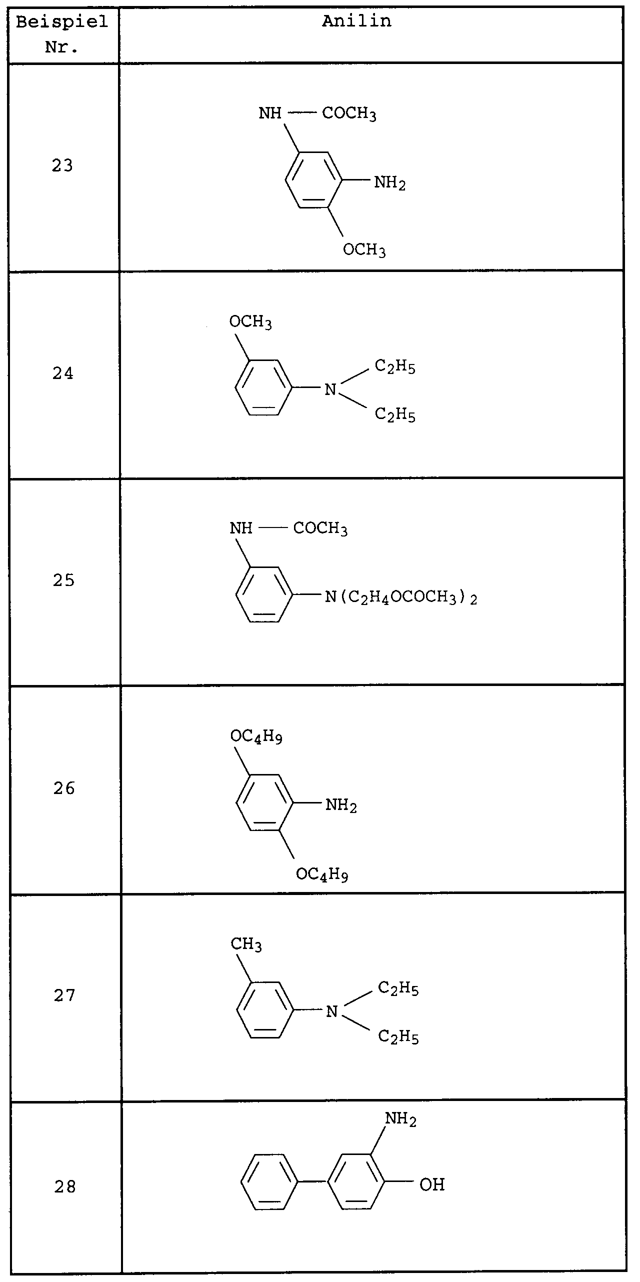

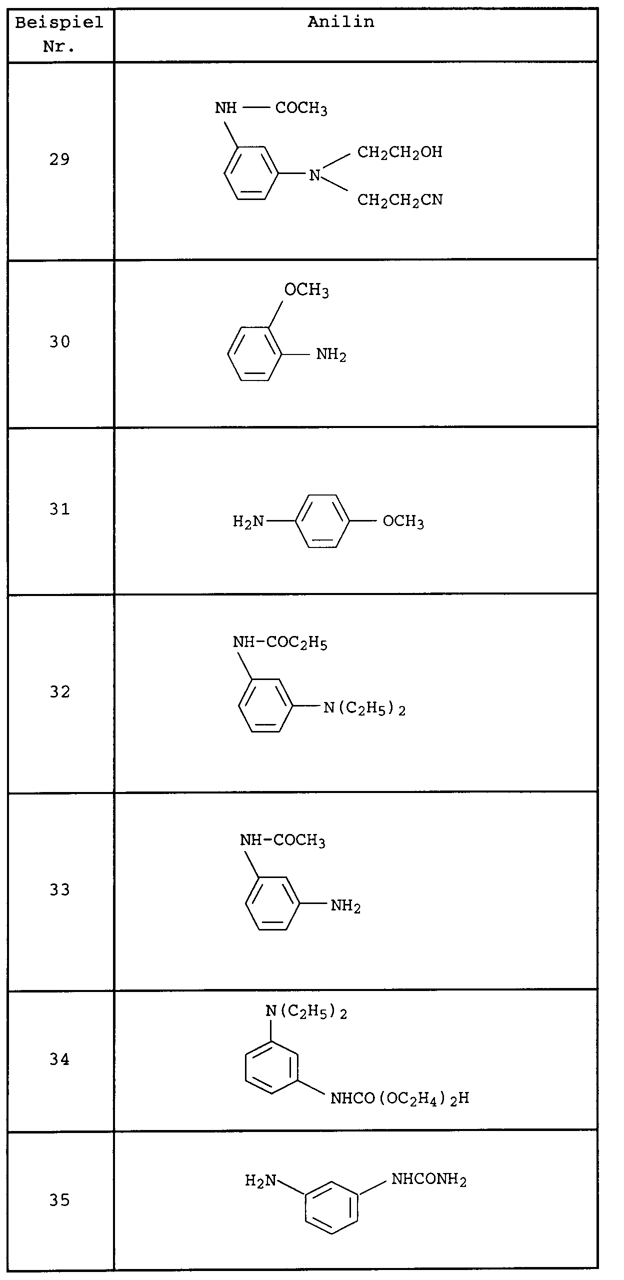

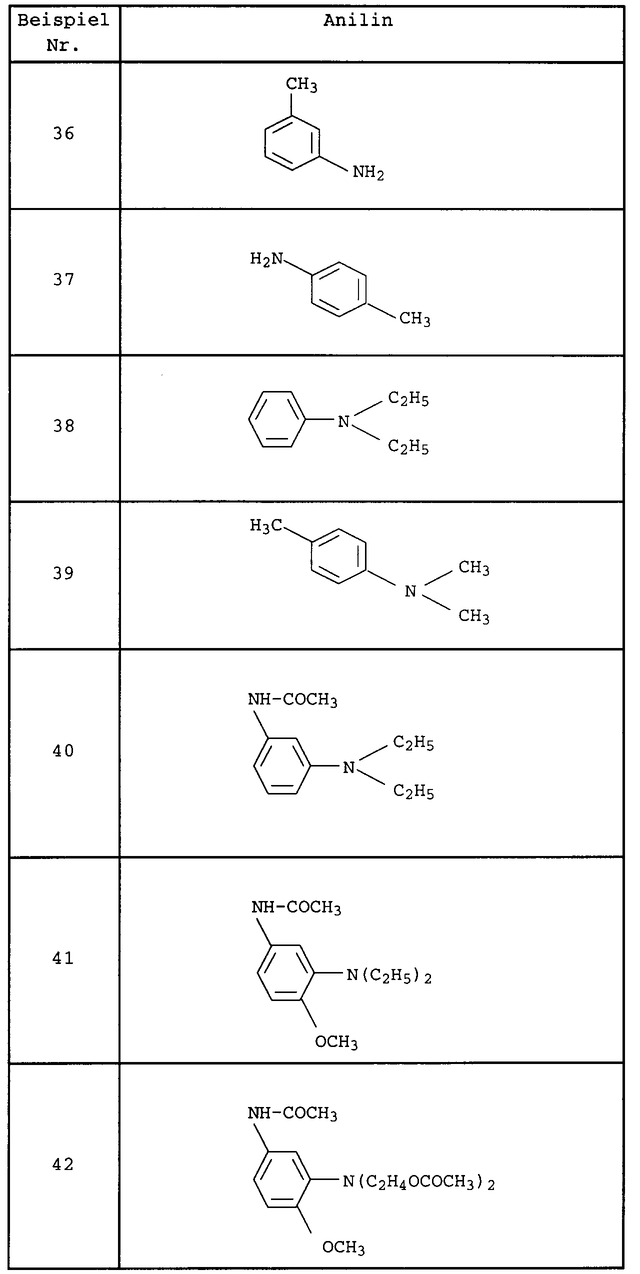

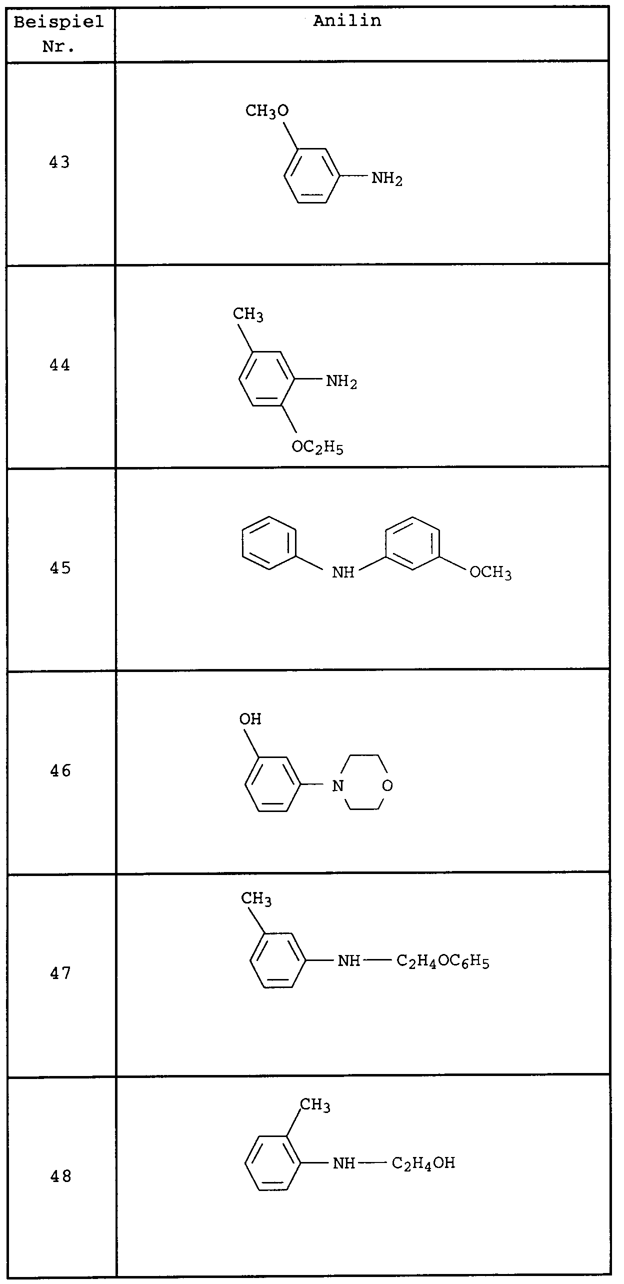

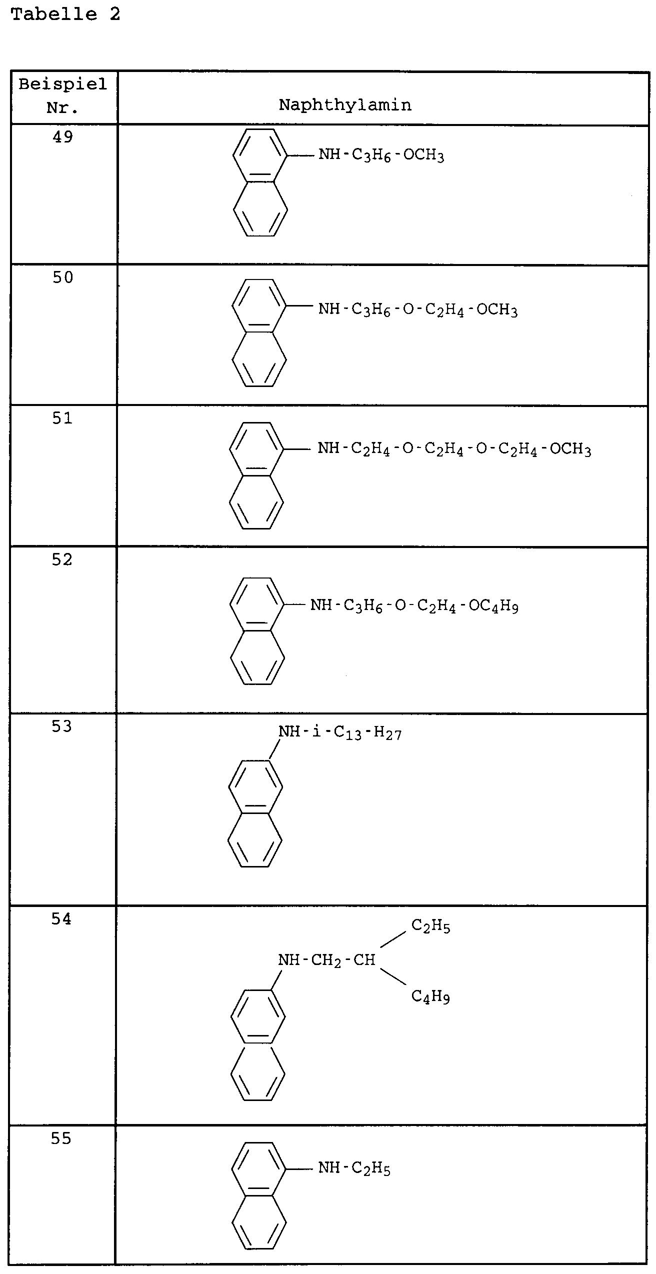

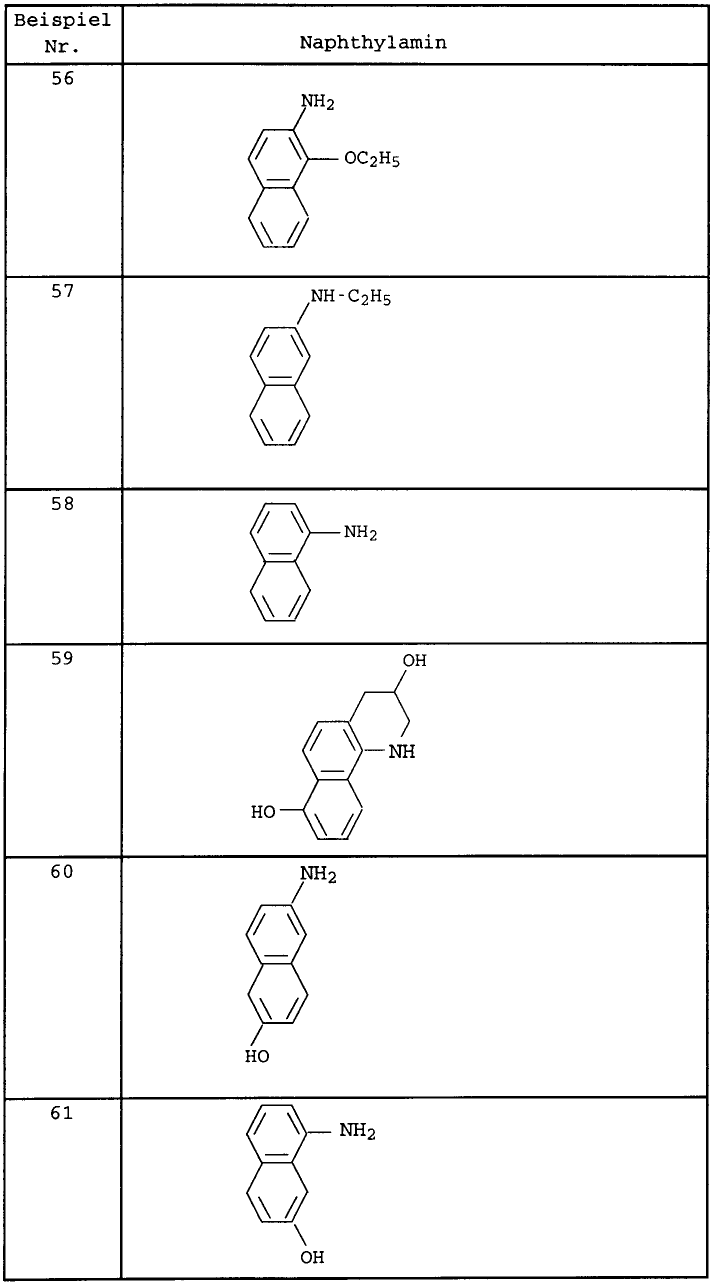

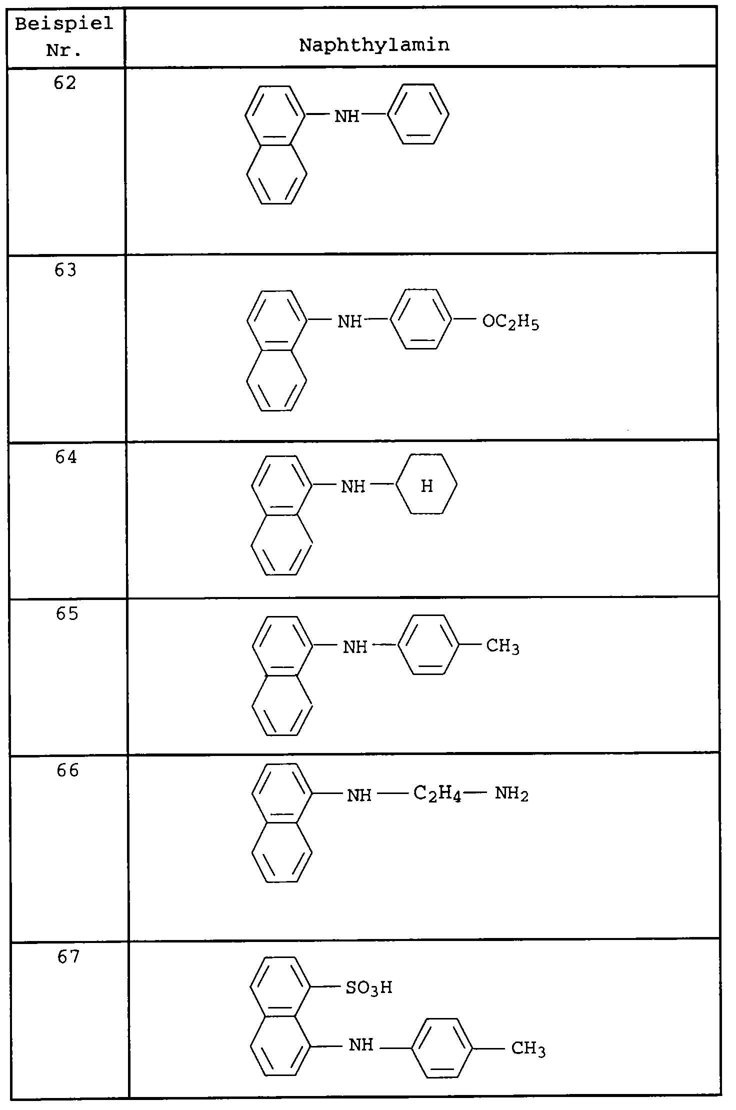

Weitere günstige Diazoniumverbindungen sind z.B. die im folgenden aufgeführten Stoffe

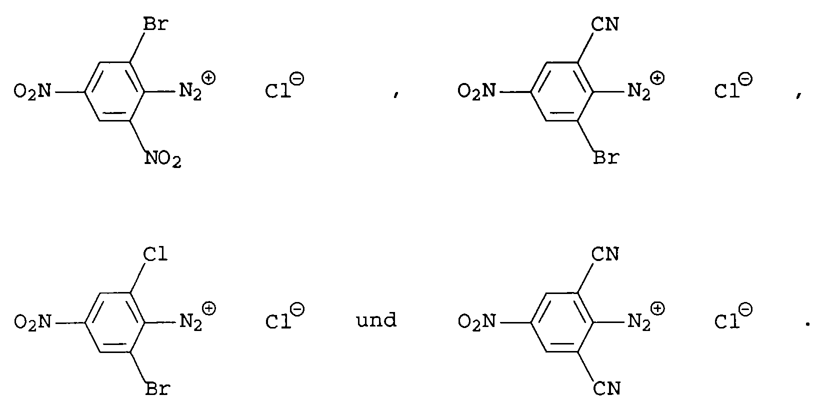

Sie ergeben bei Kupplung mit den als Markierungsmittel verwendeten Anilinen der Formel 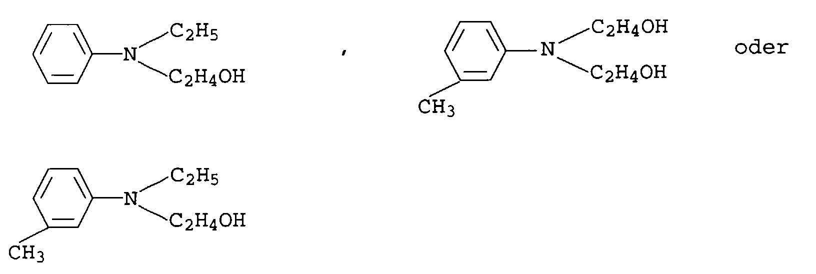 jeweils eine blaue Farbreaktion.

## Patentansprüche

1. Verwendung von Arylaminen der Formel I 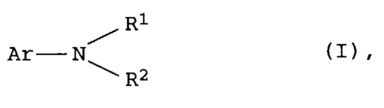 in der
Ar ein Rest der Formel 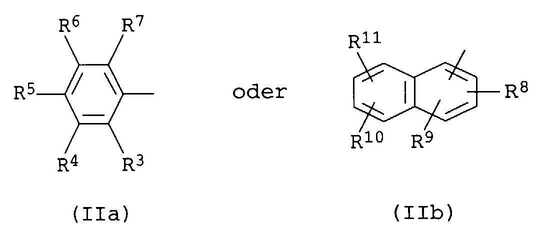 ist und
R¹ und R² unabhängig voneinander jeweils Wasserstoff, C₁-C₁₈-Alkyl, das gegebenenfalls substituiert ist und durch 1 bis 3 Sauerstoffatome in Etherfunktion oder 1 bis 3 nicht benachbarte C₁-C₄-Alkyliminogruppen unterbrochen sein kann, C₅-C₇-Cycloalkyl, C₃-C₁₈-Alkenyl, gegebenenfalls substituiertes Phenyl oder R¹ und R² zusammen mit dem sie verbindenden Stickstoffatom einen 5- oder 6-gliedrigen gesättigten heterocyclischen Rest, der ein weiteres Heteroatom aufweisen kann, oder R¹ auch einen Rest der Formel OL¹ oder NL¹L², worin L¹ und L² unabhängig voneinander jeweils für Wasserstoff, gegebenenfalls substituiertes C₁-C₁₈-Alkyl, C₅-C₇-Cycloalkyl, C₃-C₁₈-Alkenyl oder gegebenenfalls substituiertes Phenyl stehen,
R³,R⁷,R⁸,R⁹,R¹⁰ und R¹¹ unabhängig voneinander jeweils Wasserstoff, gegebenenfalls substituiertes C₁-C₁₈-Alkyl, C₂-C₁₈-Alkenyl, Cyano, Nitro, Hydroxysulfonyl, Formyl, gegebenenfalls substituiertes C₂-C₄-Alkanoyl, Formylamino, gegebenenfalls substituiertes C₂-C₄-Alkanoylamino, Benzoylamino oder einen Rest der Formel OL¹, COOL¹, CH₂COOL¹, NL¹L², SL¹ oder SO₂NL¹L², worin L¹ und L² jeweils die obengenannte Bedeutung besitzen, oder R³, R⁷ oder R⁸ zusammen mit R² C₂-C₃-Alkylen, das gegebenenfalls durch Hydroxy oder ein- bis dreifach durch Methyl substituiert ist, oder gegebenenfalls durch Phenyl substituierten C₂-C₃-Alkenylen,
R⁴ Wasserstoff, gegebenenfalls substituiertes C₁-C₁₈-Alkyl, C₂-C₁₈-Alkenyl, Nitro oder einen Rest der Formel OL¹, NL¹L², COOL¹ oder SO₂NL¹L², worin L¹ und L² jeweils die obengenannte Bedeutung besitzen, und
R⁵ und R⁶ unabhängig voneinander jeweils Wasserstoff, gegebenenfalls substituiertes C₁-C₁₈-Alkyl, C₂-C₁₈-Alkenyl, gegebenenfalls substituiertes Phenyl, Nitro, Formylamino, gegebenenfalls substituiertes C₂-C₄-Alkanoylamino, Benzoylamino, Halogen oder einen Rest der Formel OL¹, NL¹L², SO₂NL¹L², SO₂L³, COL¹ oder COOL¹, worin L¹ und L² jeweils die obengenannte Bedeutung besitzen und L³ für gegebenenfalls substituiertes C₁-C₁₈-Alkyl, C₃-C₁₈-Alkenyl oder gegebenenfalls substituiertes Phenyl steht, bedeuten,
mit der Maßgabe, daß in Formel IIb, a) wenn die Reste NR¹R² und NL¹R² peri-ständig sind, R¹ und L¹ zusammen auch Isopropyliden bedeuten können, b) mindestens einer der Reste R³, R⁵ oder R⁷ Wasserstoff bedeutet und c) 1-Aminonaphthalin ausgenommen ist,
zum Markieren von Holz.

2. Verwendung von Arylaminen nach Anspruch 1, die der Formel Ia 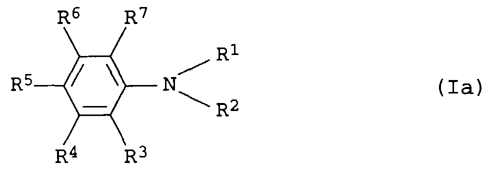 gehorchen, in der
R¹ und R² unabhängig voneinander jeweils Wasserstoff, C₁-C₁₅-Alkyl, das gegebenenfalls substituiert ist und durch 1 bis 3 Sauerstoffatome in Etherfunktion oder 1 bis 3 nicht benachbarte C₁-C₄-Alkyliminogruppen unterbrochen sein kann, Allyl, gegebenenfalls substituiertes Phenyl oder R¹ und R² zusammen mit dem sie verbindenden Stickstoffatom einen 5- oder 6-gliedrigen gesättigten heterocyclischen Rest, der ein weiteres Heteroatom aufweisen kann,
R³ und R⁷ unabhängig voneinander jeweils Wasserstoff, C₁-C₄-Alkoxy oder zusammen mit R² 1,3-Propylen, das gegebenenfalls ein- bis dreifach durch Methyl substituiert ist,
R⁴ und R⁵ jeweils Wasserstoff und
R⁶ Wasserstoff, C₁-C₄-Alkyl, C₁-C₄-Alkoxy, C₁-C₄-Alkanoylamino oder Benzoylamino bedeuten.

3. Verwendung von Arylaminen nach Anspruch 1, die der Formel Ib 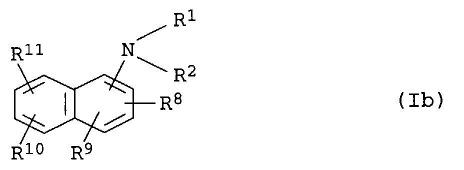 gehorchen, in der
R¹ und R² unabhängig voneinander jeweils Wasserstoff, C₁-C₁₅-Alkyl, das gegebenenfalls substituiert ist und durch 1 bis 3 Sauerstoffatome in Etherfunktion unterbrochen sein kann, Cyclohexyl, gegebenenfalls substituiertes Phenyl oder R¹ und R² zusammen mit dem sie verbindenden Stickstoffatom einen 5- oder 6-gliedrigen gesättigten heterocyclischen Rest, der ein weiteres Heteroatom aufweisen kann, und
zwei der Reste R⁸, R⁹, R¹⁰ und R¹¹ jeweils Wasserstoff und die anderen beiden unabhängig voneinander jeweils Wasserstoff, C₁-C₄-Alkyl, C₁-C₄-Alkoxy, Hydroxy, Nitro, C₁-C₄-Alkanoylamino, Benzoylamino, einen Rest der Formel NL¹L², worin L¹ und L² unabhängig voneinander für Wasserstoff oder C₁-C₄-Alkyl stehen, Cyano oder Carboxyl bedeuten, wobei, wenn die Reste NR¹R² und NL¹L² peri-ständig sind, R¹ und L¹ zusammen auch Isopropyliden bedeuten können.

4. Verwendung von Arylaminen nach Anspruch 2, dadurch gekennzeichnet, daß R¹ und R² jeweils Wasserstoff oder C₁-C₄-Alkyl oder mindestens einer der beiden Reste R¹ und R² C₂-C₁₅-Alkyl, das durch Hydroxy substituiert ist und durch 1 bis 3 Sauerstoffatome in Etherfunktion oder 1 bis 3 nicht benachbarte C₁-C₄-Alkyliminogruppen unterbrochen sein kann, und R⁶ C₁-C₄-Alkyl bedeuten.

5. Verwendung von Arylaminen nach Anspruch 3, dadurch gekennzeichnet, daß R¹ Wasserstoff, R² C₁-C₁₅-Alkyl, das durch 1 bis 3 Sauerstoffatome in Etherfunktion unterbrochen sein kann, oder Cyclohexyl und einer der Reste R⁸, R⁹, R¹⁰ und R¹¹ Hydroxy oder C₁-C₄-Alkoxy und die anderen Wasserstoff bedeuten.

6. Verfahren zum Nachweis der Anwesenheit von Arylaminen der Formel I gemäß Anspruch 1 in Holz, dadurch gekennzeichnet, daß man das Arylamin der Formel I durch Behandeln des markierten Holzes mit einem wäßrig-sauren Medium, das ein Diazoniumsalz, das sich von einem Amin aus der Aminoanthrachinon-, Aminonaphthalin-, Anilin-, Aminothiophen-, Aminothiazol- oder Aminobenzisothiazolreihe ableitet, und gegebenenfalls einen Puffer enthält, in einen Azofarbstoff überführt.
